# EUROPÄISCHE PATENTSCHRIFT

(11) **EP 2 015 969 B1**
(45) Veröffentlichungstag und Bekanntmachung des Hinweises auf die Patenterteilung: **19.08.2009**
(21) Anmeldenummer: 07726689.8
(22) Anmeldetag: 07.03.2007
(51) Int. Cl.: B60R 21/213

(54) **GASSACKANORDNUNG FÜR EINE FAHRZEUGINSASSEN-RÜCKHALTEVORRICHTUNG**
AIRBAG ARRANGEMENT FOR A RESTRAINT DEVICE FOR A MOTOR VEHICLE OCCUPANT
SYSTEME D'AIRBAG POUR DISPOSITIF DE RETENUE DES PASSAGERS D'UN VEHICULE

(30) Priorität: 27.03.2006 DE 202006005317 U
(43) Veröffentlichungstag der Anmeldung: 21.01.2009
(73) Patentinhaber: Takata-Petri AG, 63743 Aschaffenburg (DE); Bayerische Motoren Werke Aktiengesellschaft, 80809 München (DE)
(72) Erfinder: GLOECKLER, Oliver, 89278 Nersingen (DE); RASCH, Georg, 89346 Bühl (DE); EINSIEDEL, Heinrich, 89077 Ulm (DE); PASSMANN, Ralf, 40474 Düsseldorf (DE)
(74) Vertreter: Baumgärtel, Gunnar
(86) Internationale Anmeldenummer: PCT/EP2007/052131
(87) Internationale Veröffentlichungsnummer: WO 2007/110302

(56) Entgegenhaltungen:
- EP-A1- 1 110 825
- EP-A1- 1 541 426
- WO-A-00/41919
- DE-U1-0202004 019 79
- GB-A- 2 323 340

## Beschreibung

Die Erfindung betrifft eine Gassackanordnung für eine Fahrzeuginsassen-Rückhaltevorrichtung nach dem Oberbegriff des Anspruchs 1 sowie eine Gassackanordnung nach dem Oberbegriff des Anspruchs 14.

Insbesondere bei Unfällen, die auf einen Schrägaufprall zurückgehen, ist es notwendig, einen Fahrzeuginsassen vor einem Aufprall auf eine vordere Fahrzeug-Säule zu schützen. Zu diesem Zweck ist zum Beispiel aus dem Dokument EP 11 10 825 A1 ein Vorhanggassack bekannt, der sich in zusammengefalteten Zustand mit einem Abschnitt entlang eines Seitenholms des Dachrahmens der Fahrzeugkarosserie und mit einem weiteren Abschnitt quer zur Fahrzeugachse entlang eines vorderen Scheibenquerträgers oberhalb der Windschutzscheibe erstreckt. Im Auslösefall entfaltet sich der Vorhanggassack nach unten und deckt L-förmig sowohl einen Seitenfensterbereich als auch einen Abschnitt einer Fahrzeug-A-Säule ab.

Des Weiteren ist auch aus dem Dokument DE 20 2004 019 790 U1 ein gattungsgemäßer, L-förmiger Vorhanggassack bekannt. Dieser Vorhanggassack erstreckt sich zusammengefaltet ebenfalls mit einem Abschnitt quer zur Fahrzeuglängsachse, wobei sich das freie Ende dieses Abschnitts beim Entfalten des Gassacks auf einen Abschnitt der Fahrzeug-A-Säule legt. Der sich im zusammengefalteten Zustand quer zur Fahrzeuglängsachse erstreckende Abschnitt des Gassacks ist an einer hinteren Seite des Scheibenquerträgers an einer Anlenkung für eine Sonnenblende befestigt.

Das von der vorliegenden Erfindung zu lösende Problem besteht darin, die Schutzwirkung einer Gassackanordnung mit einem im zusammengefalteten Zustand L-förmigen Gassack zu verbessern.

Dieses Problem wird von einer Gassackanordnung mit den Merkmalen gemäß dem Anspruch 1 sowie einer Gassackanordnung mit den Merkmalen des Anspruchs 14 gelöst. Vorteilhafte und bevorzugte Weiterbildungen der Erfindung sind in den Unteransprüchen angegeben.

Danach ist eine Gassackanordnung für eine Fahrzeuginsassen-Rückhaltevorrichtung eines Kraftfahrzeugs vorgesehen, das eine Fahrzeuglängsachse und ein Fahrzeugdach aufweist. Das Fahrzeugdach ist durch parallel zur Fahrzeuglängsachse erstreckte seitliche Dachkantenbereiche sowie durch einen vorderen und einen hinteren quer zur Fahrzeuglängsachse erstreckten Scheibenquerträger begrenzt.

Der Gassack ist durch Aufblasen zum Schutz eines Fahrzeuginsassen entfaltbar und weist in zusammengefaltetem Zustand einen ersten und einen zweiten Abschnitt auf, wobei der erste Abschnitt entlang eines seitlichen Dachkantenbereiches und der zweite Abschnitt vom ersten Abschnitt abgewinkelt quer zur Fahrzeuglängsachse angeordnet ist. Der zweite Abschnitt des Gassacks ist entlang einer Längsseite des vorderen Scheibenquerträgers angeordnet, die - entlang der parallel zur Fahrzeuglängsachse verlaufenden Vorwärtsfahrtrichtung betrachtet - ein vorderes Ende des vorderen Scheibenquerträgers bildet.

Die Positionierung des sich quer zur Fahrzeugachse erstreckenden zweiten Gassackabschnittes entlang einer vorderen Längsseite des Scheibenquerträgers ermöglicht eine einfachere Montage dieses Abschnitts als bei den bekannten Systemen. Die vordere Längsseite des Scheibenquerträgers ist bei der Montage leichter zugänglich, wodurch der abgewinkelte Abschnitt des Gassacks und somit der Gassack insgesamt einfacher montierbar ist.

Es sei allerdings darauf hingewiesen, dass der zweite Abschnitt zwar entlang einer vorderen Längsseite des Scheibenquerträgers anzuordnen ist; dies bedeutet jedoch nicht unbedingt, dass die Montage an einer nach vorne weisenden Stirnseite des Scheibenquerträgers erfolgen muss. Der zweite Abschnitt kann z.B. auch in einem vorderen Abschnitt auf der nach unten weisenden Seite des Scheibenquerträgers angebracht werden.

Insbesondere ist der zweite Abschnitt des Gassacks so ausgebildet und angeordnet, beim Entfalten auf eine Säule der Fahrzeugkarosserie umzuklappen, wobei die Säule von einem vorderen Ende des seitlichen Dachkantenbereichs (schräg) in Richtung auf den Fahrzeugboden verläuft. Die Säule kann insbesondere die A-Säule einer Fahrzeugkarosserie sein.

Dadurch, dass beim Auslösen des Gassacks ein Abschnitt auf die A-Säule des Fahrzeugs umklappt, wird ein Fahrzeuginsasse auch bei einem Schrägaufprall wirksam geschützt. Einen erst im Auslösefall umklappenden Abschnitt vorzusehen, bietet gegenüber Gassäcken, die direkt in eine A-Säule integriert oder an einer A-Säule angeordnet sind, den Vorteil, dass ein kleineres Gassackvolumen benötigt wird. Dies ermöglicht das Verwenden kleinerer Gasgeneratoren zum Aufblasen des Gassacks. Darüber hinaus ist keine spezielle Funktionsverkleidung für die A-Säule erforderlich.

In einer besonders vorteilhaften Ausgestaltung der Erfindung ist vorgesehen, dass beim Entfalten des Gassacks der gesamte zweite Abschnitt, der sich von einer Knickstelle bis zu einem der Knickstelle gegenüber liegenden freien Ende erstreckt, auf die Säule der Fahrzeugkarosserie umklappt. Dies bedeutet, dass sich der zweite Abschnitt des Gassacks komplett frei entfalten kann, wobei zwischen der Knickstelle und dem freien Ende dieses Abschnitts keinerlei Befestigungsmittel für eine dauerhafte Befestigung angebracht sind. Der Gassack ist demnach im Bereich des zweiten Abschnitts entweder gar nicht oder lediglich lösbar mit der Fahrzeugkarosserie verbunden.

Dadurch, dass der zweite Abschnitt des Gassacks im Auslösefall komplett nach vorne umklappt, wird ein großer Bereich der A-Säule abgedeckt. Hierdurch wird ein durch einen Unfall auf die A-Säule beschleunigter Fahrzeuginsasse besonders wirksam geschützt.

Es ist insbesondere vorteilhaft, wenn der zweite Abschnitt vor dem Auslösen des Gassacks direkt oder über ein weiteres Teil der Fahrzeugkarosserie mit dem Scheibenquerträger lösbar verbunden ist. Dabei ist entscheidend, dass sich eine derartige Verbindung beim Entfalten des Gassacks löst, damit sich der quer zur Fahrzeuglängsachse angeordnete zweite Abschnitt nach vorne auf die Fahrzeug-Säule entfalten kann. Wie erwähnt, ist es jedoch nicht unbedingt notwendig, dass der zweite Abschnitt überhaupt mit der Fahrzeugkarosserie verbunden wird; es liegt z.B. ebenfalls im Rahmen der Erfindung, ihn so anzuordnen, dass er auf einem an dem Dachrahmen der Fahrzeugkarosserie angebrachten Dachhimmel aufliegt.

Eine lösbare Verbindung des Gassacks kann zum Beispiel über eine Clipverbindung hergestellt werden. Es kommen darüber hinaus etwa auch Befestigungselemente mit Sollbruchstellen in Betracht, die unter dem Entfaltungsdruck des Gassacks brechen und das Entfalten und Umklappen eines quer zur Fahrzeugachse angeordneten zweiten Abschnitts des Gassacks nicht behindern.

In besonders vorteilhafter Weise ist der zweite Abschnitt des zusammengefalteten Gassacks mit einer Gassackhülle umgeben, die im Bereich des Scheibenquerträgers mit der Fahrzeugkarosserie verbunden ist. Dabei kann die Gassackhülle direkt oder über ein weiteres Teil mit dem Scheibenquerträger verbunden sein. Die Gassackhülle kann dazu z.B. besondere Befestigungslaschen aufweisen. Hierbei ist lediglich die Gassackhülle über den Scheibenquerträger mit der Fahrzeugkarosserie verbunden; nicht der Gassack selber, damit er sich beim Auslösen des Gassacks ungehindert nach entfalten und nach vorne umklappen kann.

Der erste Abschnitt des zusammengefalteten Gassacks ist bevorzugt im Bereich eines seitlichen Dachkantenbereiches an der Fahrzeugkarosserie so befestigt, dass er sich beim Aufblasen des Gassacks zwar nach unten entfaltet, aber mit einem oberen Abschnitt an dem Dachkantebereich befestigt bleibt. Dies bedeutet, dass nur über den sich längs der Fahrzeugachse erstreckenden Abschnitt des Gassacks die eigentliche Befestigung des Gassacks an der Fahrzeugkarosserie erfolgt. Hierfür weist der erste Abschnitt des Gassacks beispielsweise Befestigungslaschen auf, die über spezielle Befestigungselemente (zum Beispiel Befestigungsclips) an dem seitlichen Dachkantenbereich der Fahrzeugkarosserie oder an einem sonstigen Teil der Fahrzeugkarosserie befestigt sind.

Im Auslösefall wird sich der montierte Gassack insgesamt vorhangartig nach unten entfalten, wobei der entfaltete Gassack an seiner Oberkante entlang der seitlichen Dachkante beispielsweise über die erwähnten Befestigungsclips gehaltert ist. Wie erwähnt, ist dabei lediglich der sich längs des seitlichen Dachkantenbereiches erstreckende erste Abschnitt des Gassacks dauerhaft mit der Fahrzeugkarosserie verbunden, während der sich quer zur Fahrzeugachse entlang des oberen Scheibenquerträgers erstreckende zweite Abschnitt frei beweglich ist und beim Aufblasen des Gassacks nach vorne umklappt.

Der sich längs der Fahrzeugachse erstreckende erste Abschnitt des Gassacks kann in für Vorhanggassäcke üblicher Weise ausgestaltet sein. Beispielsweise kann der Gassack insbesondere in diesem Bereich mehrere Kammern aufweisen, die mit unterschiedlichem Druck befüllbar sein können. Hierdurch wäre zum Beispiel eine Adaption des Gassack-Innendrucks an verschiedene Körperbereiche eines Fahrzeug-Insassen möglich.

Zum Anpassen des Gassack-Innendrucks, insbesondere verschiedener Kammern des Gassacks, kann eine Belüftungsöffnung vorgesehen sein. Derartige Vorrichtungen zur Anpassung des Gassack-Innendrucks sind jedoch an sich bekannt, so dass an dieser Stelle auf sie nicht weiter eingegangen wird.

In einem zweiten Aspekt betrifft die Erfindung eine Gassackanordnung, die einen Gassack aufweist, der sich zusammengefaltet mit einem ersten Abschnitt entlang eines seitlichen Dachkantenbereiches erstreckt und ein zweiter Abschnitt des Gassacks vom ersten Abschnitt abgewinkelt quer zur Fahrzeuglängsachse angeordnet ist. Im Unterschied zum ersten Aspekt der Erfindung knickt der zweite Abschnitt im Bereich einer sich von einem mittleren Abschnitt des seitlichen Dachkantenbereichs in Richtung auf den Fahrzeugboden erstreckenden Säule der Fahrzeugkarosserie vom ersten Abschnitt ab.

Insbesondere ist der zweite Abschnitt des Gassacks so ausgebildet und angeordnet, beim Entfalten auf diese Säule umzuklappen. Bei der Säule handelt es sich z.B. um eine Fahrzeug-B-Säule. Diese Variante der Gassackanordnung schützt einen hinteren Fahrzeuginsassen bei einem Schrägaufprall des Fahrzeuges, da ein Aufprallen eines Fahrzeuginsassen auf die B-Säule des Fahrzeugs durch den auf sie umklappenden Abschnitt des Gassacks abgefedert wird.

Der sich quer zur Fahrzeuglängsachse erstreckende zweite Abschnitt des Gassacks kann z.B. an entlang eines im Bereich der B-Säule quer zur Fahrzeugachse verlaufenden Abschnitt des Fahrzeugdachs lösbar befestigt sein. Wie bei der oben beschriebenen ersten Variante der Erfindung muss sich der zweite Abschnitt beim Entfalten von einer Befestigung lösen und nach vorne umklappen können.

Die Erfindung wird im Folgenden anhand von Ausführungsbeispielen unter Bezugnahme auf die Figuren näher erläutert. Es zeigen:
- Fig.1a-1c: Ansichten einer Fahrzeugkarosserie mit einem zusammengefalteten Gassack gemäß einem Ausführungsbeispiel der Erfindung;
- Fig. 2a, 2b: die vergrößerte Darstellung eines an einer Fahrzeugkarosserie ange-ordneten Gassacks gemäß der vorliegenden Erfindung;
- Fig. 3: die Seitenansicht eines entfalteten Gassacks;
- Fig. 4a, 4b: vergrößerte Ansichten eines entfalteten Gassacks.

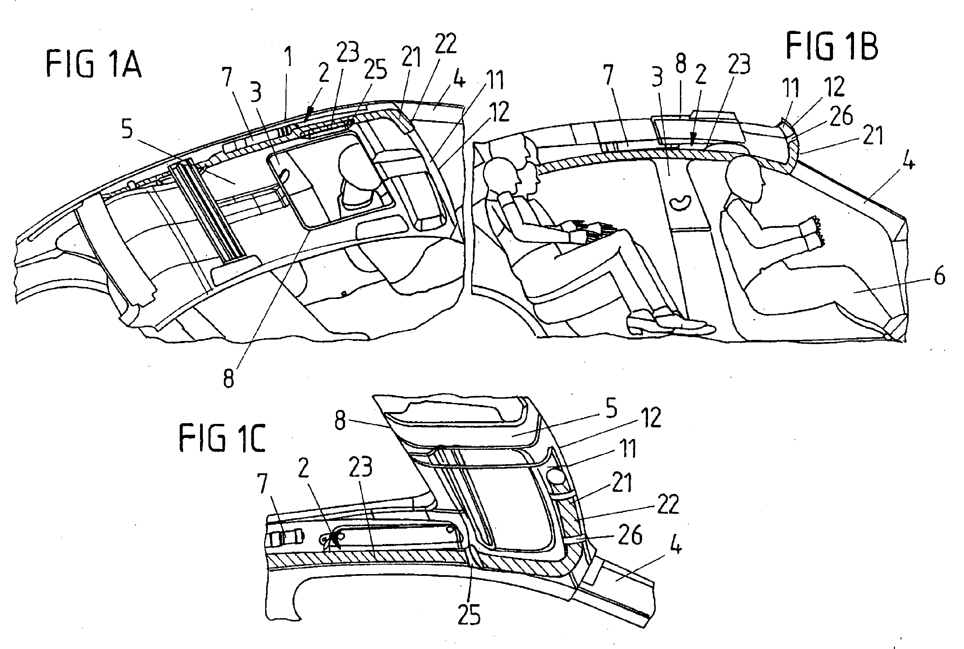

Die Fig. 1 a ist die Ansicht einer Fahrzeugkarosserie von schräg oben, die einen an ihrem Dachrahmen angebrachten Dachhimmel 5 aufweist, der durch eine Aussparung 8 für ein Dachfenster einen Blick auf den Fahrzeuginnenraum freigibt. Die Fahrzeugkarosserie umfasst des Weiteren einen Dachrahmen mit einem seitlichen Dachholm 1 als seitlichen Dachkantenbereich. Dem seitlichen Dachholm 1 schließt sich nach vorne eine Fahrzeug-A-Säule 4 an, die sich schräg nach unten in Richtung des Fahrzeugbodens erstreckt. Etwa im Bereich des Ansatzes der Fahrzeug-A-Säule 4 an den seitlichen Dachholm 1 ist ein quer zur Fahrzeuglängsachse verlaufender vorderer Scheibenquerträger 11 mit dem seitlichen Dachholm 1 verbunden. Am Dachrahmen ist, wie erwähnt, der Dachhimmel 5 angebracht.

An dem Dachrahmen der Fahrzeugkarosserie ist zudem ein eingefalteter L-förmiger. Vorhanggassack 2 angeordnet. Der zusammengefaltete Vorhanggassack 2 erstreckt sich mit einem ersten Abschnitt 23 von einer Fahrzeug-B-Säule 3 in Richtung der Fahrzeug-A-Säule 4. Im Bereich des Ansatzes des vorderen Scheibenquerträgers 11 an den seitlichen Dachholm 1 knickt der Vorhanggassack 2 ab und erstreckt sich mit einem zweiten Abschnitt 21 entlang einer nach vorne weisenden Längsseite des vorderen Scheibenquerträgers 11. Zum Aufblasen des Vorhanggassacks 2 ist an dem seitlichen Dachholm 1 ein Gasgenerator 7 angeordnet, der im Bereich der Fahrzeug-B-Säule 3 mit dem Vorhanggassack 2 verbunden ist.

Im Auslösefall wird sich der Vorhanggassack 2 nach unten entfalten und zum einen mit dem ersten Abschnitt 23 einen Seitenfensterbereich des Fahrzeugs abdecken. Darüber hinaus ist der zweite Abschnitt des Gassacks 2 so ausgebildet und angeordnet, dass er sich beim Aufblasen des Vorhanggassacks 2 einerseits nach unten entfaltet und andererseits nach vorne umklappt, um einen Abschnitt der Fahrzeug-A-Säule in Höhe des Kopfes eines Fahrzeuginsassen 6 abzudecken. Durch das Umklappen des zweiten Abschnitts wird insbesondere der Kopfbereich eines Fahrzeuginsassen bei einem Aufprall auf die A-Säule geschützt. Dies ist besonders bei Schrägaufprall-Unfällen von Bedeutung.

Der gesamte Vorhanggassack 2 ist von einer Gassackhülle 22 umgeben, die im Auslösefall den sich entfaltenden Gassack freigibt (z.B. zerreißt), so dass dieser nicht beim Entfalten behindert wird. Der erste Abschnitt 23 des Vorhanggassacks 2 ist über seitliche Befestigungselemente 25 am Vorhanggassack 2 mit dem seitlichen Dachholm 1 der Fahrzeugkarosserie verbunden. Beim Auslösen des Vorhanggassacks 2 wird der Abschnitt 23 sich, wie erwähnt, vorhangartig nach unten entfalten, wobei sein oberer Bereich mit dem seitlichen Dachholm 1 verbunden bleibt. Hierbei erfolgt die Befestigung insbesondere über unmittelbar am Gassack ausgebildete Befestigungslaschen (nicht dargestellt), nicht über die Gassackhülle 22.

Die Befestigung des zweiten Abschnitts 21 des Vorhanggassacks 2 am Scheibenquerträger 11 erfolgt dagegen über lösbare Befestigungselemente 26, beispielsweise in Form von lösbaren Befestigungsclips. Hierbei ist die Gassackhülle 22 mit dem Scheibenquerträger 11 verbunden, nicht der Abschnitt 21 des Gassacks selber; hierdurch ist sichergestellt, dass er ungehindert in Richtung der A-Säule 4 umklappen kann.

Die Verbindung des zweiten Abschnitts 21 mit dem Scheibenquerträger 11 wird im Auslösefall durch den Entfaltungsdruck des Gassacks gelöst, so dass der Abschnitt 21 nach dem Auslösen des Gassacks keine Verbindung zum Scheibenquerträger 11 aufweist. Dies hat zur Folge, dass er sich einerseits vorhangartig nach unten entfaltet und andererseits nach vorne auf die Fahrzeug-A-Säule 4 klappen kann. Insgesamt wird somit durch den Vorhanggassack 2 nicht nur der Bereich zwischen B- und A-Säule des Fahrzeugs gesichert, sondern über den nach vorne klappenden zweiten Abschnitt 21 auch die A-Säule 4 selber.

Die Fig. 1 b zeigt die Anordnung der Fig. 1 a in einer Ansicht von schräg unten. Fig. 1 c ist eine Ansicht vom Fahrzeuginnenraum her. Insbesondere ist der sich entlang des vorderen Scheibenquerträgers 11 erstreckende Abschnitt 21 des Vorhanggassacks 2 zu erkennen. Der Vorhanggassack 2 und insbesondere sein Abschnitt 21 erstrecken sich oberhalb des Fahrzeughimmels 5. Dabei liegt der entlang des Scheibenquerträgers 11 angeordnete Abschnitt 21 des Gassackes nicht auf dem Dachhimmel 5 auf, sondern ist, wie in Bezug auf die Fig. 1a bereits erwähnt, über lösbare Befestigungselemente 26 im Bereich des Scheibenquerträgers 11 mit der Fahrzeugkarosserie verbunden.

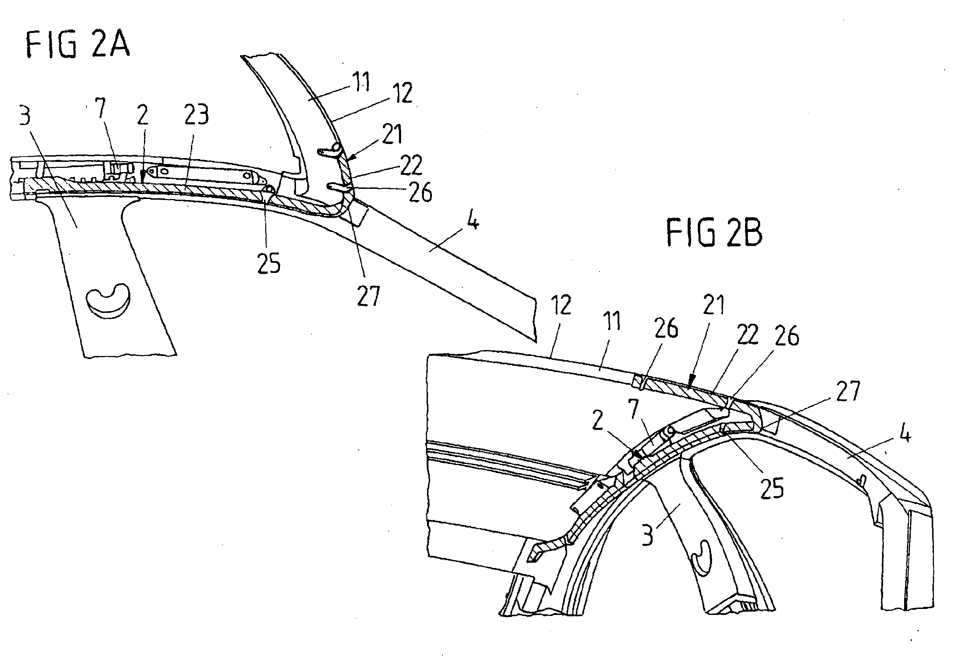

In der Fig. 2a ist ein zusammengefalteter, L-förmiger Vorhanggassack 2 in gegenüber der Figuren 1 a-1 c vergrößerter Darstellung gezeigt. Dabei ist der in den Fig. 1a-1c dargestellte Fahrzeughimmel weggelassen. Deutlich ist zu erkennen, wie ein erster Abschnitt 21 des Vorhanggassacks 2 vom sich längs der Fahrzeugrichtung erstreckenden ersten Abschnitt 23 an einer Knickstelle 27 abknickt und entlang eines vorderen Scheibenquerträgers 11 angeordnet ist.

Der zweite Abschnitt 21 des Vorhanggassacks 2 ist wiederum lösbar über eine ihn umgebende Gassackhülle 22 mit dem Scheibenquerträger 11 verbunden. Die lösbare Befestigung des Abschnitts 21 erfolgt über schellenartige Befestigungselemente 26, die z.B. mit einer Sollbruchstelle versehen sind. Im Auslösefall würden die Verbindungselemente 26 dann entlang dieser Sollbruchstelle aufbrechen, wodurch sich der Abschnitt 21 des Vorhanggassacks 2 ungehindert entfalten und in Richtung der Fahrzeug-A-Säule 4 umklappen kann.

Fig. 2b zeigt die Anordnung der Fig. 2a in einer weiteren Ansicht von schräg vorne. Deutlich ist zu erkennen, wie der Vorhanggassack 2 mit einem Abschnitt 21 entlang des Scheibenquerträgers 11 abknickt. Der Abschnitt 21 ist dabei mit lösbaren Befestigungselementen 26 an dem Scheibenquerträger 11 befestigt.

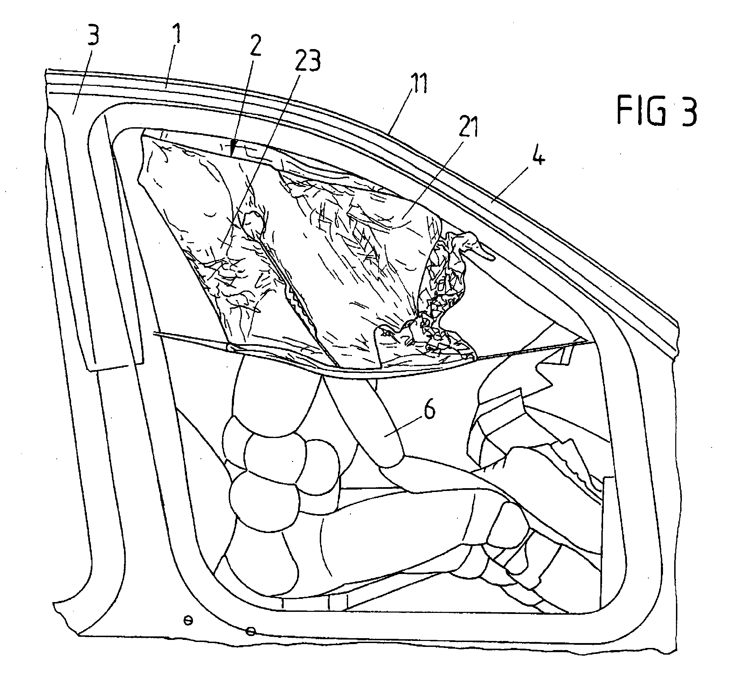

Die Fig. 3 zeigt einen entfalteten Vorhanggassack 2. Man erkennt, dass sich sein entlang eines seitlichen Dachholms 1 des Fahrzeugdaches erstreckender erster Abschnitt 23 vorhangartig nach unten entfaltet hat. Ein ursprünglich im Scheibenquerträger 11 angeordnete zweiter Abschnitt 21 des Vorhanggassacks 2 ist komplett nach vorne so umgeklappt, dass er auf einer Fahrzeug-A-Säule 4 der Fahrzeugkarosserie aufliegt und diese teilweise abdeckt. Ein Fahrzeuginsasse 6 wird durch den nach vorne geklappten Abschnitt 21 des Gassacks 2 auch bei einem schrägen Aufprall geschützt, da ein Aufprall des Fahrzeuginsassen 6 auf die Fahrzeug-A-Säule 4 durch den umgeklappten Abschnitt 21 des Vorhanggassackes 2 abgefedert wird.

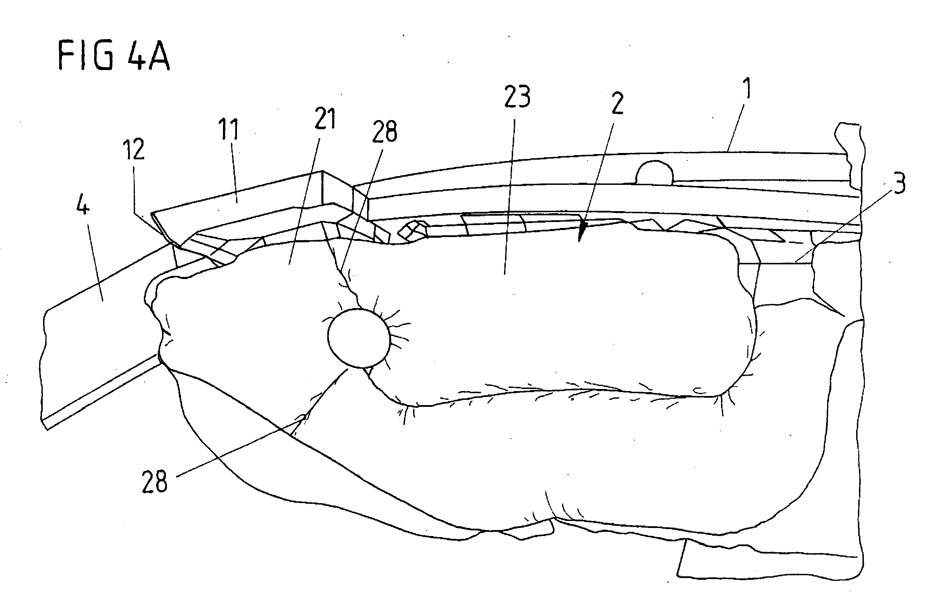

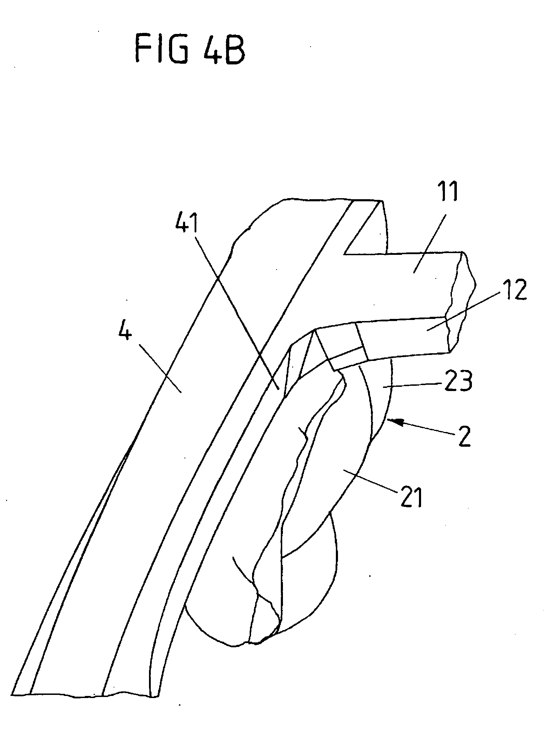

Die Figuren 4a und 4b zeigen weitere Ansichten eines entfalteten Vorhanggassacks gemäß der vorliegenden Erfindung. Die Fig. 4a zeigt einen Blick auf einen entfalteten Vorhanggassack 2 vom Fahrzeug-Innenraum her. Zu erkennen ist, dass sich ein erster Abschnitt 23 des Vorhanggassacks 2 nach unten im Bereich zwischen der Fahrzeug-B-Säule 3 und der Fahrzeug-A-Säule 4 entfaltet hat und somit im Wesentlichen eine Seitenscheibe des Fahrzeugs abdeckt. Zusätzlich ist ein zweiter Abschnitt 21 des Vorhanggassacks 2 nach vorne auf einen Abschnitt der Fahrzeug-A-Säule 4 umgeklappt, um einen Fahrzeuginsassen (nicht dargestellt) bei einem Aufprall auf diese zu schützen.

Im eingefalteten Zustand war der Abschnitt 21 Gassack 2 entlang von Faltlinien 28 in Richtung des vorderen Scheibenquerträgers 11 abgeknickt. Beim Aufblasen des Vorhanggassacks 2 klappt dann der gesamte Abschnitt 21 entlang der Faltlinien 28 nach vorne um.

Die Fig. 4b zeigt eine weitere Ansicht des entfalteten Vorhanggassacks 2 der Figur 4a. In der Ansicht der Fig. 4b wird der entfaltete Gassack 2 von vorne, d.h. gewissermaßen durch die Windschutzscheibe des Fahrzeugs hindurch betrachtet. Man erkennt, dass ein im gefalteten Zustand entlang des Scheibenquerträgers 11 angeordneter zweiter Abschnitt 21 des Vorhanggassacks 2 sich auf einen Abschnitt einer Fahrzeug-A-Säule 4 entfaltet hat und auf einer Innenverkleidung 41 der Fahrzeug-A-Säule 4 aufliegt.

### Bezugszeichenliste

- 1: seitlicher Holm des Fahrzeugdaches
- 11: vorderer Scheibenquerträger
- 12: vordere Längsseite des Scheibenquerträgers
- 2: Vorhanggassack
- 21: zweiter Abschnitt des Vorhanggassacks
- 22: Gassackhülle
- 23: erster Abschnitt des Vorhanggassacks
- 25: seitliche Befestigungselemente
- 26: Befestigungselemente
- 27: Knickstelle
- 28: Faltlinien
- 3: Fahrzeug-B-Säule
- 4: Fahrzeug-A-Säule
- 41: Innenverkleidung der A-Säule
- 5: Fahrzeughimmel
- 6: Fahrzeuginsasse
- 7: Gasgenerator
- 8: Aussparung für Dachfenster

## Patentansprüche

1. Gassackanordnung für eine Fahrzeuginsassen-Rückhaltevorrichtung eines Kraftfahrzeugs, das eine Fahrzeuglängsachse und ein Fahrzeugdach aufweist, wobei
- das Fahrzeugdach durch parallel zur Fahrzeuglängsachse erstreckte seitliche Dachkantenbereiche sowie durch einen vorderen quer zur Fahrzeuglängsachse erstreckten Scheibenquerträger begrenzt ist,
- der Gassack durch Aufblasen zum Schutz eines Fahrzeuginsassen entfaltbar ist und in zusammengefaltetem Zustand einen ersten und einen zweiten Abschnitt aufweist,
- der erste Abschnitt des zusammengefalteten Gassacks entlang eines seitlichen Dachkantenbereiches und der zweite Abschnitt vom ersten Abschnitt abgewinkelt quer zur Fahrzeuglängsachse angeordnet ist,
**dadurch gekennzeichnet, dass**
der zweite Abschnitt (21) des Gassacks (2) entlang einer Längsseite (12) des vorderen Scheibenquerträgers (11) angeordnet ist, die - entlang der parallel zur Fahrzeuglängsachse verlaufenden Vorwärtsfahrtrichtung betrachtet - ein vorderes Ende des vorderen Scheibenquerträgers (11) bildet, wobei der Gassack (2) im Bereich des zweiten Abschnittes (21) gar nicht oder beim Entfalten des Gassacks (2) lösbar mit der Fahrzeugkarosserie verbunden ist, so dass sich der komplette zweite Abschnitt (21) beim Entfalten des Gassacks (2) frei entfalten kann.

2. Gassackanordnung nach Anspruch 1, **dadurch gekennzeichnet, dass** der zweite Abschnitt (21) des Gassacks (2) so ausgebildet und angeordnet ist, beim Entfalten auf eine Säule (4) der Fahrzeugkarosserie umzuklappen, wobei die Säule (4) von einem vorderen Ende des seitlichen Dachkantenbereichs (1) in Richtung auf den Fahrzeugboden verläuft.

3. Gassackanordnung nach Anspruch 2; **dadurch gekennzeichnet, dass** die Säule (4) eine A-Säule der Fahrzeugkarosserie ist.

4. Gassackanordnung nach Anspruch 2 oder 3, **dadurch gekennzeichnet, dass** sich der zweite Abschnitt (21) des Gassacks (2) von einer Knickstelle (27) bis zu einem der Knickstelle (27) gegenüber liegenden freien Ende erstreckt und der Gassack (2) so angeordnet ist, dass beim Entfalten des Gassacks (2) der gesamte zweite Abschnitt (21) in Richtung der Säule (4) der Fahrzeugkarosserie umklappt.

5. Gassackanordnung nach einem der vorhergehenden Ansprüche, **dadurch gekennzeichnet, dass** der zweite Abschnitt (21) am vorderen Scheibenquerträger (11) befestigt ist, wobei die Befestigung ausschließlich über lösbare Befestigungsmittel (26) erfolgt, die sich beim Entfalten (21) des Gassacks (2) vom Scheibenquerträger (11) lösen.

6. Gassackanordnung nach einem der vorhergehenden Ansprüche, **dadurch gekennzeichnet, dass** der zweite Abschnitt (21) von einer Gassackhülle (22) umgeben ist, die am Scheibenquerträger (11) befestigt ist.

7. Gassackanordnung nach Anspruch 6, **dadurch gekennzeichnet, dass** die Gassackhülle (22) im Auslösefall durch den Entfaltungsdruck des Gassacks (2) aufreißt.

8. Gassackanordnung nach Anspruch 6, **dadurch gekennzeichnet, dass** die Gassackhülle (22) mit lösbaren Befestigungsmitteln (26) am Scheibenquerträger (11) befestigt ist und sich beim Entfalten des Gassacks (2) vom Scheibenquerträger (11) löst.

9. Gassackanordnung nach einem der vorhergehenden Ansprüche, **dadurch gekennzeichnet, dass** der zweite Abschnitt (21) oberhalb eines am Fahrzeugdach vorgesehenen Dachhimmels (5) angeordnet ist.

10. Gassackanordnung nach einem der vorhergehenden Ansprüche, **dadurch gekennzeichnet, dass** der erste Abschnitt (23) des Gassacks (2) an einem seitlichen Dachkantenbereich (1) des Fahrzeugdachs so befestigt ist, dass er sich beim Aufblasen des Gassacks (2) nach unten entfaltet und mit einem oberen Abschnitt mit dem Dachkantenbereich (1) verbunden bleibt.

11. Gassackanordnung nach Anspruch 10, **dadurch gekennzeichnet, dass** der erste Abschnitt (23) des Gassacks (2) über Befestigungslaschen des Gassacks (2) an dem seitlichen Dachkantenbereich (1) befestigt ist.

12. Gassackanordnung nach einem der vorhergehenden Ansprüche, **dadurch gekennzeichnet, dass** der Gassack (2) mehrere Kammern aufweist.

13. Gassackanordnung nach einem der vorhergehenden Ansprüche, **dadurch gekennzeichnet, dass** der Gassack (2) eine Belüftungsöffnung zum Anpassen des Gassack-Innendrucks aufweist.

14. Gassackanordnung für eine Fahrzeuginsassen-Rückhaltevorrichtung eines Kraftfahrzeugs, das eine Fahrzeuglängsachse und ein Fahrzeugdach aufweist, wobei
- das Fahrzeugdach durch parallel zur Fahrzeuglängsachse erstreckte seitliche Dachkantenbereiche sowie durch einen vorderen quer zur Fahrzeuglängsachse erstreckten Scheibenquerträger begrenzt ist,
- der Gassack durch Aufblasen zum Schutz eines Fahrzeuginsassen entfaltbar ist und in zusammengefaltetem Zustand einen ersten und einen zweiten Abschnitt aufweist,
- der erste Abschnitt des zusammengefalteten Gassacks entlang eines seitlichen Dachkantenbereiches und der zweite Abschnitt vom ersten Abschnitt abgewinkelt quer zur Fahrzeuglängsachse angeordnet ist,
**dadurch gekennzeichnet, dass**
der zweite Abschnitt des Gassacks (2) im Bereich einer sich von einem mittleren Abschnitt des seitlichen Dachkantenbereichs (1) in Richtung auf den Fahrzeugboden erstreckenden Säule (3) der Fahrzeugkarosserie vom ersten Abschnitt abknickt, wobei der zweite Abschnitt des Gassacks (2) so ausgebildet und angeordnet ist, beim Entfalten auf die Säule (3) der Fahrzeugkarosserie umzuklappen.

15. Gassackanordnung nach Anspruch 14, **dadurch gekennzeichnet, dass** die Säule' (3) eine B-Säule der Fahrzeugkarosserie ist.

## Claims

1. An airbag arrangement for a restraint device for an occupant of a motor vehicle which has a longitudinal axis and a vehicle roof, wherein
- the vehicle roof is bounded by lateral roof edge regions extending parallel to the longitudinal axis of the vehicle and by a front window cross member extending transversely with respect to the longitudinal axis of the vehicle,
- the airbag can be deployed by means of inflation in order to protect a motor vehicle occupant and, in the folded-up state, has a first section and a second section,
- the first section of the folded-up airbag is arranged along a lateral roof edge region and the second section is arranged angled away from the first section transversely with respect to the longitudinal axis of the vehicle,
**characterized in that** the second section (21) of the airbag (2) is arranged along a longitudinal side (12) of the front window cross member (11), which longitudinal side - as viewed along the forward direction of travel running parallel to the longitudinal axis of the vehicle - forms a front end of the front window cross member (11), the airbag (2) not being connected to the vehicle body at all in the region of the second section (21) or being connected releasably thereto when the airbag (2) is deployed, and therefore, when the airbag (2) is deployed, the entire second section (21) can be deployed freely.

2. The airbag arrangement as claimed in claim 1,
**characterized in that** the second section (21) of the airbag (2) is designed and arranged so as to fold down, when deployed, onto a vehicle body pillar (4), the pillar (4) running from a front end of the lateral roof edge region (1) in the direction of the vehicle floor.

3. The airbag arrangement as claimed in claim 2, **characterized in that** the pillar (4) is an A-pillar of the vehicle body.

4. The airbag arrangement as claimed in claim 2 or 3, **characterized in that** the second section (21) of the airbag (2) extends from a bending point (27) as far as a free end lying opposite the bending point (27), and the airbag (2) is arranged in such a manner that, when the airbag (2) is deployed, the entire second section (21) folds down in the direction of the pillar (4) of the vehicle body.

5. The airbag arrangement as claimed in one of the preceding claims, **characterized in that** the second section (21) is fastened to the front window cross member (11), the fastening taking place exclusively via releasable fastening means (26) which are released from the window cross member (11) when the airbag (2) is deployed (21).

6. The airbag arrangement as claimed in one of the preceding claims, **characterized in that** the second section (21) is surrounded by an airbag covering (22) which is fastened to the window cross member (11).

7. The airbag arrangement as claimed in claim 6,
**characterized in that,** in the event of triggering, the airbag covering (22) tears open because of the deployment pressure of the airbag (2).

8. The airbag arrangement as claimed in claim 6,
**characterized in that** the airbag covering (22) is fastened to the window cross member (11) with releasable fastening means (26) and is released from the window cross member (11) when the airbag (2) is deployed.

9. The airbag arrangement as claimed in one of the preceding claims, **characterized in that** the second section (21) is arranged above a roof lining (5) provided on the vehicle roof.

10. The airbag arrangement as claimed in one of the preceding claims, **characterized in that** the first section (23) of the airbag (2) is fastened to a lateral roof edge region (1) of the vehicle roof in such a manner that it is deployed downward, when the airbag (2) is inflated, and remains connected by an upper section to the roof edge region (1).

11. The airbag arrangement as claimed in claim 10, **characterized in that** the first section (23) of the airbag (2) is fastened to the lateral roof edge region (1) via fastening tabs of the airbag (2).

12. The airbag arrangement as claimed in one of the preceding claims, **characterized in that** the airbag (2) has a plurality of chambers.

13. The airbag arrangement as claimed in one of the preceding claims, **characterized in that** the airbag (2) has a ventilation opening for the adaptation of the internal pressure of the airbag.

14. An airbag arrangement for a restraint device for an occupant of a motor vehicle which has a longitudinal axis and a vehicle roof, wherein
- the vehicle roof is bounded by lateral roof edge regions extending parallel to the longitudinal axis of the vehicle and by a front window cross member extending transversely with respect to the longitudinal axis of the vehicle,
- the airbag can be deployed by means of inflation in order to protect a motor vehicle occupant and, in the folded-up state, has a first section and a second section,
- the first section of the folded-up airbag is arranged along a lateral roof edge region and the second section is arranged angled away from the first section transversely with respect to the longitudinal axis of the vehicle,
**characterized in that** the second section of the airbag (2) bends away from the first section in the region of a vehicle body pillar (3) which extends from a central section of the lateral roof edge region (1) in the direction of the vehicle floor, the second section of the airbag (2) being designed and arranged so as to fold down, when deployed, onto the vehicle body pillar (3).

15. The airbag arrangement as claimed in claim 14, **characterized in that** the pillar (3) is a B-pillar of the vehicle body.

## Revendications

1. Système à airbag pour un dispositif de retenue de passager d'un véhicule automobile, lequel présente un axe longitudinal et une toiture, dans lequel
- la toiture du véhicule est délimitée par des zones de bordure de toiture latérales s'étendant parallèlement à l'axe longitudinal du véhicule ainsi que par une traverse antérieure porte-vitre s'étendant transversalement à l'axe longitudinal du véhicule,
- l'airbag est capable de se déployer par gonflage pour la protection d'un passager du véhicule et présente, à l'état replié, un premier et un second tronçon,
- le premier tronçon de l'airbag replié est agencé le long d'une zone latérale de la bordure de toiture et le second tronçon est agencé transversalement à l'axe longitudinal du véhicule, en équerre par rapport au premier tronçon,
**caractérisé en ce que** le second tronçon (21) de l'airbag (2) et agencé le long d'un côté allongé (12) de la traverse antérieure porte-vitre (11), ce côté formant, considéré le long de la direction de circulation en marche avant qui s'étend parallèlement à l'axe longitudinal du véhicule, une extrémité antérieure de la traverse antérieure porte-vitre (11), et l'airbag (2) n'est pas du tout relié à la carrosserie du véhicule dans la région du second tronçon (21), ou est relié à celle-ci de façon détachable lors du déploiement de l'airbag (2), de sorte que le second tronçon complet (21) peut se déployer librement lors du déploiement de l'airbag (2).

2. Système à airbag selon la revendication 1, **caractérisé en ce que** le second tronçon (21) de l'airbag (2) est réalisé et agencé de telle façon qu'il se rabat lors du déploiement sur un montant (4) de la carrosserie du véhicule, ledit montant (4) s'étendant depuis une extrémité antérieure de la zone de bordure de toiture latérale (1) en direction du plancher du véhicule.

3. Système à airbag selon la revendication 2, **caractérisé en ce que** le montant (4) est un montant avant de la carrosserie du véhicule.

4. Système à airbag selon la revendication 2 ou 3, **caractérisé en ce que** le second tronçon (21) de l'airbag (2) s'étend depuis un emplacement de pliage (27) jusqu'à une extrémité libre située à l'opposé de l'emplacement de pliage (27), et **en ce que** l'airbag (2) est agencé de telle façon que, lors du déploiement de l'airbag (2), la totalité du second tronçon (21) se rabat en direction du montant (4) de la carrosserie du véhicule.

5. Système à airbag selon l'une des revendications précédentes, **caractérisé en ce que** le second tronçon (21) est fixé sur la traverse antérieure porte-vitre (11), la fixation ayant lieu exclusivement via des moyens de fixation détachables (26), qui se détachent de la traverse porte-vitre (11) lors du déploiement (21) de l'airbag (2).

6. Système à airbag selon l'une des revendications précédentes, **caractérisé en ce que** le second tronçon (21) est entouré par une enveloppe d'airbag (22) qui est fixée sur la traverse porte-vitre (11).

7. Système à airbag selon la revendication 6, **caractérisé en ce que** l'enveloppe d'airbag (22) se déchire en cas de déclenchement sous la pression de déploiement de l'airbag (2).

8. Système à airbag selon la revendication 6, **caractérisé en ce que** l'enveloppe d'airbag (22) est fixée sur la traverse porte-vitre (11) avec des moyens de fixation détachables (26), et se détache de la traverse porte-vitre (11) lors du déploiement de l'airbag (2).

9. Système à airbag selon l'une des revendications précédentes, **caractérisé en ce que** le second tronçon (21) est agencé au-dessus d'un pavillon de toiture (5) prévu au niveau de la toiture du véhicule.

10. Système à airbag selon l'une des revendications précédentes, **caractérisé en ce que** le premier tronçon (23) de l'airbag (2) est fixé sur une zone de bordure latérale (1) de la toiture du véhicule de telle façon qu'il se déploie vers le bas lors du gonflage de l'airbag (2) et reste relié à la zone de bordure (1) de la toiture au moyen d'une portion supérieure.

11. Système à airbag selon la revendication 10, **caractérisé en ce que** le premier tronçon (23) de l'airbag (2) est fixé sur la zone de bordure de toiture latérale (1) via des pattes de fixation de l'airbag (2).

12. Système à airbag selon l'une des revendications précédentes, **caractérisé en ce que** l'airbag (2) comporte plusieurs chambres.

13. Système à airbag selon l'une des revendications précédentes, **caractérisé en ce que** l'airbag (2) comporte une ouverture de mise à l'air pour adapter la pression intérieure de l'airbag.

14. Système à airbag pour un dispositif de retenue de passager d'un véhicule automobile, lequel présente un axe longitudinal et une toiture, dans lequel
- la toiture du véhicule est délimitée par des zones de bordure latérales qui s'étendent parallèlement à l'axe longitudinal du véhicule ainsi que par une traverse antérieure porte-vitre qui s'étend transversalement à l'axe longitudinal du véhicule,
- l'airbag est déployable par gonflage pour la protection d'un passager du véhicule et comprend, à l'état replié, un premier et un second tronçon,
- le premier tronçon de l'airbag replié est agencé le long d'une zone de bordure latérale de la toiture et le second tronçon est agencé transversalement à l'axe longitudinal du véhicule en équerre par rapport au premier tronçon,
**caractérisé en ce que** le second tronçon de l'airbag (2) forme un pli depuis le premier tronçon, dans la zone d'un montant (3) de la carrosserie du véhicule, qui s'étend depuis un tronçon médian de la zone de bordure latérale (1) de la toiture en direction du plancher du véhicule, et ledit second tronçon de l'airbag (2) est réalisé et agencé de telle façon qu'il se rabat sur le montant (3) de la carrosserie du véhicule lors du déploiement.

15. Système à airbag selon la revendication 14, **caractérisé en ce que** le montant (3) est un montant central de la carrosserie du véhicule.
